# EUROPEAN PATENT SPECIFICATION

(11) **EP 3 798 100 B1**
(45) Date of publication and mention of the grant of the patent: **10.04.2024**
(21) Application number: 20198900.1
(22) Date of filing: 29.09.2020
(51) Int. Cl.: B62D 15/02

(54) **IMPROVED WHEEL ANGLE SENSOR ASSEMBLY**
VERBESSERTE RADWINKELSENSORANORDNUNG
ENSEMBLE CAPTEUR D'ANGLE DE ROUE AMÉLIORÉ

(30) Priority: 30.09.2019 IT 201900017492
(43) Date of publication of application: 31.03.2021
(73) Proprietor: CNH Industrial Italia S.p.A., 10156 Torino (IT)
(72) Inventor: MENCARELLI, Marco, 41122 Modena (IT); SILVAGNI, Giancarlo, 41126 Modena (IT)
(74) Representative: CNH Industrial IP Department

(56) References cited:
- EP-A2- 0 873 932
- WO-A2-02/46025
- US-A1- 2020 070 885

## Description

### TECHNICAL FIELD

The present invention concerns a wheel angle sensor assembly, in particular a wheel angle sensor assembly for work vehicles such as agricultural vehicle.

### BACKGROUND OF THE INVENTION

Work vehicles such as agricultural vehicles are more and more automatized in order to substitute manual work of the operators.

An example of such automatized operation is the so-called "auto-guidance" modality. Into such modality of operation, work vehicle is controlled via GPS positioning in order to run into a predefined path. Accordingly, on the base of GPS position, the control unit of the vehicle controls actuators for varying the angle/direction of motion of the vehicle.

In view of the foregoing, it is clear that the wheel angle is a crucial measure and requires a high level of precision.

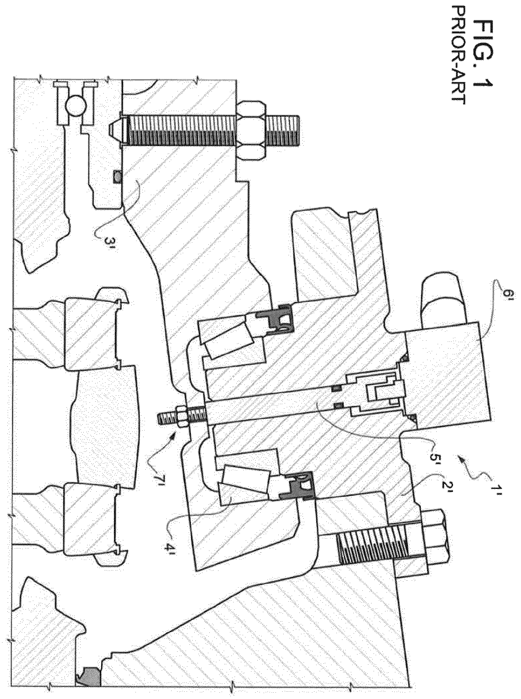

According to the present state of the art, disclosed in figure 1, an angle sensor assembly 1' is provided between a knuckle 2' and a front axle 3'.

The knuckle 2' is carried in a rotatably free manner by the front axle 3', e.g. by roller bearings 4'. Angle sensor assembly 1' comprises a pin 5', carried by front axle 3' and an angle sensor 6' carried by the knuckle 2'. Angle sensor 6' is configured to detect the relative rotation of pin 5' with respect to angle sensor 6' itself and to communicate such value to a vehicle control unit.

Thus, it is clear that the angular phase positioning between pin 5' and angle sensor 6' is an essential issue. According to the state of the art, pin 5' is inserted into knuckle 2', phased with respect to front axle 3' thanks to a designed hand tool and then fixed with respect to front axle 3'. The fixation is generally made thanks to a threaded coupling 7' achieved by a terminal threaded portion of pin 5' and a nut configured to screw onto this latter portion and thereby fixing the pin 5' to front axle 3'.

In view of the above, it is clear that the manual measure and fixation obviously can lead to imprecisions that make an erroneous phasing between pin 5' and angle sensor 6'.

Furthermore, the hand tool tends to wear use by use and therefore it may pose pin 5' incorrectly on the base of such wear.

Moreover, it is clear from drawings that the threaded coupling 7' thanks to nut into a terminal threaded portion of the pin 5' is uncomfortable. Furthermore, such mounting must be realized preliminarily on steering assemblies of work vehicles. Accordingly, the manufacturing of a steering assembly comprising a wheel angle sensor assembly 1' according to the prior art is costly and complex.

EP0873932A2 discloses a device that detects the wheel angle of an industrial vehicle and a structure for installing a wheel angle detector at a predetermined position. WO0246025A2 discloses the features of the preamble of the independent claim and describes an angle sensor for sensing the angular position of a steerable wheel on a vehicle, wherein the sensor is mounted to be concentric with and internally connected to the kingpin that pivotally mounts a wheel hub to a fixed hub on the axle.

Therefore, the need is felt to provide a fixation of an angle sensor assembly that is simpler, faster and more economic with respect to the one known in the art.

An aim of the present invention is to satisfy the above mentioned needs in an optimized and cost-effective way.

### SUMMARY OF THE INVENTION

The aforementioned aim is reached by an angle assembly for a work vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a cross-sectional view of a portion of a work vehicle comprising an angle sensor assembly as known in the prior art;
- Figure 2 is a cross-sectional view of a portion of a work vehicle comprising an angle sensor assembly according to the invention;
- Figure 3 is a top view, with parts removed for sake of clarity, of a portion of the work vehicle according to the invention; and
- Figure 4 is a sectioned view, with parts removed for sake of clarity, of the portion of Figure 3 about line IV-IV.

### DETAILED DESCRIPTION OF THE INVENTION

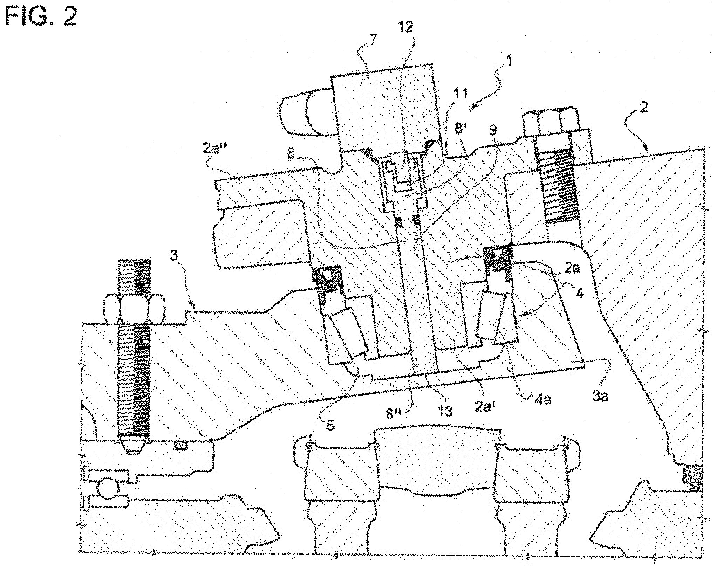

Figure 2 discloses a portion of a steering assembly of work vehicle (not shown in its entirety) comprising a wheel angle sensor assembly 1 according to the invention, interposed between a knuckle 2 and a front axle portion 3.

In greater particular, the knuckle 2 is carried in rotatably free manner by front axle portion 3 via support means 4, preferably comprising bearings 4a. According to the described embodiment, the knuckle 2 comprises an axisymmetric portion 2a carried by roller bearings 4a housed in a receptacle 5 defined by a cup-shaped portion 3a of front axle portion 3.

The wheel angle sensor assembly 1 comprises an angle sensor 7 and a steering pin 8; preferably, angle sensor 7 is carried by knuckle 2 in order to be coupled at rotation with this latter and steering pin 8 is carried by front axle portion 3 to be coupled at rotation with this latter.

In greater particular, axisymmetric portion 2a of knuckle 2 has a substantial cylindrical shape comprising a lower part 2a' engaging with support means 4 and an upper part 2a'' opposite with respect to lower part 2a'. Portion 2a defines further a hole 9 passing through axisymmetric portion 2a from upper part 2a'' to lower part 2a'.

Steering pin 8 is advantageously housed inside such hole 9 while angle sensor 7 is housed on axisymmetric portion 2a to close hole 9 from the side of upper part 2a".

Steering pin 8 comprises an upper portion 8' configured to cooperate with angle sensor 7 via a slot 11 realized in a terminal part of upper portion 8' and configured to cooperate with a related protrusion 12 carried by angle sensor 7 so that when the pin 8 rotates, the protrusion 12 rotates and the angle sensor may sense the amount of rotation.

Steering pin further comprises a lower portion 8'' defining a mechanical coupling 13 with front axle portion 3, preferably at the cup-shaped portion 3a. According to the invention, such mechanical coupling 11 is a poka-yoke coupling, i.e. is a mechanical shape coupling that allows the coupling of pin 8 to the front axle portion 3 only with a predetermined position of the pin 8.

As clear from the above, such predetermined position is a predefined correct angular coupling between pin 8 and front axle portion 3, thereby defining a correct angular coupling between pin 8 and angle sensor 6, i.e., according to the described embodiment, a correct angular phase coupling between slot 11 and protrusion 12.

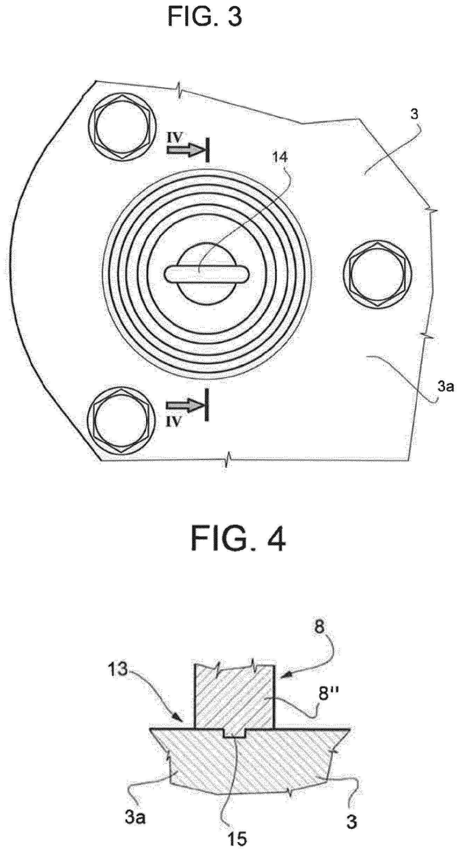

According to the described embodiment, as shown in figures 3 and 4, mechanical coupling 13 comprises a slot 14 realized in front axle portion 3 configured to house a protrusion 15 extending from steering pin 8. In the described embodiment, slot 14 has a substantially rectangular shape and extends vertically inside front axle portion 3 while protrusion 15 extends from lower portion 8" of steering pin parallel to a longitudinal axis of this latter.

In particular, slot 14 may house protrusion 15 with a free clearance. Preferably, slot 14 is realized inside front axle portion 3 for at least 3 mm, thereby guaranteeing a correct coupling between pin 8 and front axle portion 3.

The assembly and working operation of the above disclosed wheel angle sensor assembly 1 according to the invention is the following.

The knuckle 2 is mounted definitively on front axle 3 and the steering pin 8 is inserted into hole 9. Then, steering pin 8 is rotated about its longitudinal axis so that mechanical coupling 13 allows the coupling with front axle portion 3. In particular, pin 8 is rotated till protrusion 14 can be inserted into slot 15.

When such coupling is achieved, then pin 8 is coupled to front axle portion 3 and sensor 7 can be mounted to knuckle 2, i.e. covering hole 9 and so that its protrusion 12 cooperates with slot 11. Accordingly, sensors 7 may measure variation in relative rotation between knuckle 2 with respect to front axle portion 3 with high precision since the phasing between pin 8 and sensor 7 is precisely set.

In view of the foregoing, the advantages of wheel angle sensor assembly 1 according to the invention are apparent.

The use of a mechanical shape coupling allows not to use the hand tool and the threaded connection as known in the art, thereby facilitating the mounting of the wheel angle sensor assembly 1, reducing elements and time for mounting this latter.

According to the above, since mounting time and elements are reduced, costs are saved.

Moreover, the use of a poka-yoke coupling allow to precisely and without possibility of error couple the steering pin 8 on the right position with respect to sensor 7.

According to the proposed construction arrangement, steering assembly of work vehicles may be produce without the wheel angle sensor assembly 1; indeed, steering assemblies are currently produced with preliminary mounting of a steering pin on the front axle 3, if a wheel angle sensor assembly is required. Therefore, it is possible to mount wheel angle sensor assembly 1 as a later stage simply by inserting pin 8 into hole 9 and coupling the sensor 7 on knuckle 2.

In view of the above, the substitution of wheel angle sensor assembly 1 is more simple, economic and quick with respect to known systems. Accordingly, current wheel angle sensor assembly 1 may be sold as a kit and substituted or integrated when necessary into a steering assembly.

In view of the last possibility, the manufacturing line of a steering assembly of a work vehicle comprising the wheel angle sensor assembly 1 according to the invention may be the same of a steering assembly which is not provided of such device. Indeed, no preliminary operation of mounting a steering pin via threaded elements is required.

It is clear that modifications can be made to the described wheel angle sensor assembly 1 which do not extend beyond the scope of protection defined by the claims.

For example, the support means 4 and the shape of front axle 3 or knuckle 2 may be varied according to the typology of work vehicle.

Again, the mechanical coupling 13 may be realized in different ways without departing from its claimed function.

Furthermore, even if in the present disclosure it has been described only a configuration into which the pin is carried by the front axle, it is clear that the present invention may apply to a mirror configuration into which the pin is carried by the knuckle and the sensor by the front axle.

## Claims

1. Wheel angle sensor assembly (1) for measuring a relative rotation between a front axle (3) of a work vehicle with respect to a knuckle (2) configured to be coupled to a wheel of said work vehicle, said wheel angle sensor assembly (1) comprising a steering pin (8) configured to be carried and coupled at rotation via a mechanical shape coupling (13) with one (2,3) between said front axle (3) and said knuckle (2), said wheel angle sensor assembly (1) further comprising an angle sensor (7) configured to be carried and coupled at rotation with the other (2,3) between said front axle (3) and said knuckle (2), wherein said mechanical shape coupling (13) is realized between a protrusion (15) carried by one between said steering pin (8) and said front axle (3) and configured to cooperate with a slot (14) carried by the other between said steering pin (8) and said front axle (3) and **characterized in that** said sensor (7) is carried by said knuckle (2), one (7,8) between said sensor (7) and said pin (8) comprises a further protrusion (12) configured to cooperate with a housing (11) realized in the other (7,8) between said sensor (7) and said pin (8).

2. Wheel angle sensor assembly according to claim 1, wherein said mechanical shape coupling (13) is a poka-yoke coupling.

3. Wheel angle sensor assembly according to claims 1 or 2, wherein said mechanical shape coupling (13) is realized between said steering pin (8) and said front axle (3).

4. Wheel angle sensor assembly according to claim 3, wherein said slot is realized into said front axle (3) and said protrusion (15) is realized in said pin (8) and extending from a lower portion (8") of this latter parallel to its longitudinal axis.

5. Steering assembly of a work vehicle comprising a front axle (3) and a knuckle (2) configured to be coupled to a wheel of said work vehicle and a wheel angle sensor assembly according to any of the preceding claims.

6. Work vehicle comprising a front axle (3) and a knuckle (2) configured to be coupled to a wheel of said work vehicle and a wheel angle sensor assembly according to one of the claims from 1 to 4.

## Patentansprüche

1. Radwinkelsensoranordnung (1) zum Messen einer relativen Drehung zwischen einer Vorderachse (3) eines Arbeitsfahrzeugs in Bezug zu einem Achsschenkel (2), der dazu eingerichtet ist, mit einem Rad des Arbeitsfahrzeugs verbunden zu sein, wobei die Radwinkelsensoranordnung (1) einen Achsschenkelbolzen (8) aufweist, der dazu eingerichtet ist, von einer mechanischen Formverbindung (13) getragen und bei einer Drehung über die mechanische Formverbindung (13) mit einem (2, 3) Element aus der Vorderachse (3) und dem Achsschenkel (2) verbunden zu sein, wobei die Radwinkelsensoranordnung (1) des Weiteren einen Winkelsensor (7) aufweist, der dazu eingerichtet ist, von dem anderen (2, 3) Element aus der Vorderachse (3) und dem Achsschenkel (2) getragen und bei einer Drehung damit verbunden zu sein, wobei die mechanische Formverbindung (13) aus einem Vorsprung (15), der von einem Element aus dem Achsschenkelbolzen (8) und der Vorderachse (3) getragen wird, verwirklicht und dazu eingerichtet ist, mit einer Nut (14), die von dem anderen Element aus dem Achsschenkelbolzen (8) und der Vorderachse (3) getragen wird, zusammen zu wirken und
**dadurch gekennzeichnet, dass**
der Sensor (7) von dem Achsschenkel (2) getragen wird, wobei ein (7, 8) Element aus dem Sensor (7) und dem Bolzen (8) einen weiteren Vorsprung (12) aufweist, der dazu eingerichtet ist, mit einem Gehäuse (11), das in dem anderen (7, 8) Element aus dem Sensor (7) und dem Bolzen (8) verwirklicht ist, zusammen zu wirken.

2. Radwinkelsensoranordnung nach Anspruch 1, wobei die mechanische Formverbindung (13) eine Poka-Yoke Verbindung ist.

3. Radwinkelsensoranordnung nach Anspruch 1 oder 2, wobei die mechanische Formverbindung (13) zwischen dem Achsschenkelbolzen (8) und der Vorderachse (3) verwirklicht ist.

4. Radwinkelsensoranordnung nach Anspruch 3, wobei die Nut in der Vorderachse (3) verwirklicht ist und der Vorsprung (15) in dem Bolzen (8) verwirklicht ist und sich von einem unteren Abschnitt (8") des letzteren parallel zu dessen Längsachse erstreckt.

5. Lenkanordnung eines Arbeitsfahrzeugs, das eine Vorderachse (3) und einen Achsschenkel (2), der dazu eingerichtet ist, mit einem Rad des Arbeitsfahrzeugs verbunden zu sein, und eine Radwinkelsensoranordnung nach einem der vorhergehenden Ansprüche aufweist.

6. Arbeitsfahrzeug, das eine Vorderachse (3) und einen Achsschenkel (2), der dazu eingerichtet ist, mit einem Rad des Arbeitsfahrzeugs verbunden zu sein, und eine Radwinkelsensoranordnung nach einem der Ansprüche 1 bis 4 aufweist.

## Revendications

1. - Ensemble capteur d'angle de roue (1) pour mesurer une rotation relative entre un essieu avant (3) d'un véhicule de travail par rapport à un porte-fusée (2) configuré pour être couplé à une roue dudit véhicule de travail, ledit ensemble capteur d'angle de roue (1) comprenant un pivot de direction (8) configuré pour être porté et couplé en rotation à l'aide d'un raccord mécanique (13) avec un premier élément (2, 3) entre ledit essieu avant (3) et ledit porte-fusée (2), ledit ensemble capteur d'angle de roue (1) comprenant en outre un capteur d'angle (7) configuré pour être porté et couplé en rotation avec un second élément (2, 3) entre ledit essieu avant (3) et ledit porte-fusée (2), dans lequel ledit raccord mécanique (13) est réalisé entre une saillie (15) portée par un premier élément entre ledit pivot de direction (8) et ledit essieu avant (3) et configuré pour interagir avec une fente (14) portée par un second élément entre ledit pivot de direction (8) et ledit essieu avant (3) et **caractérisé en ce que** ledit capteur (7) est porté par ledit porte-fusée (2), un premier élément (7, 8) entre ledit capteur (7) et ledit pivot (8) comprend une autre saillie (12) configurée pour interagir avec un boîtier (11) présent dans un second élément (7, 8) entre ledit capteur (7) et ledit pivot (8).

2. - Ensemble capteur d'angle de roue selon la Revendication 1, dans lequel ledit raccord mécanique (13) est un raccord détrompeur.

3. - Ensemble capteur d'angle de roue selon la Revendication 1 ou la Revendication 2, dans lequel ledit raccord mécanique (13) est réalisé entre ledit pivot de direction (8) et ledit essieu avant (3).

4. - Ensemble capteur d'angle de roue selon la Revendication 3, dans lequel ladite fente est réalisée dans ledit essieu avant (3) et ladite saillie (15) est réalisée dans ledit pivot (8), s'étendant à partir d'une partie inférieure (8") de ce dernier parallèlement à son axe longitudinal.

5. - Ensemble de direction d'un véhicule de travail comprenant un essieu avant (3) et un porte-fusée (2) configurés pour être couplés à une roue dudit véhicule de travail et un ensemble capteur d'angle de roue selon l'une quelconque des revendications précédentes.

6. - Véhicule de travail comprenant un essieu avant (3) et un porte-fusée (2) configurés pour être couplés à une roue dudit véhicule de travail et un ensemble capteur d'angle de roue selon l'une quelconque des revendications 1 à 4.
